# EUROPÄISCHE PATENTSCHRIFT

(11) **EP 4 082 810 B1**
(45) Veröffentlichungstag und Bekanntmachung des Hinweises auf die Patenterteilung: **27.08.2025**
(21) Anmeldenummer: 21170634.6
(22) Anmeldetag: 27.04.2021
(51) Int. Cl.: B60H 1/00, B60H 3/06

(54) **SCHUTZBELÜFTUNG UND MOBILE ARBEITSMASCHINE MIT EINER SOLCHEN SCHUTZBELÜFTUNG**
PROTECTIVE VENTILATION AND MOBILE WORKING MACHINE WITH SUCH A VENTILATION DEVICE
AÉRATION DE PROTECTION ET MACHINE DE TRAVAIL MOBILE DOTÉ D'UNE TELLE AÉRATION DE PROTECTION

(43) Veröffentlichungstag der Anmeldung: 02.11.2022
(73) Patentinhaber: Filterion Sp.z.o.o., 58-100 Swidnica (PL)
(72) Erfinder: MÜLLER, Stefan, 45739 Oer-Erkenschwick (DE)
(74) Vertreter: Patentanwälte Dr. Keller, Schwertfeger Partnerschaft mbB

(56) Entgegenhaltungen:
- EP-A1- 3 173 266
- EP-A1- 3 318 434
- WO-A1-2010/037466
- WO-A1-2015/159248
- WO-A1-2019/120880
- WO-A1-2019/130196

## Beschreibung

Die vorliegende Erfindung betrifft eine Schutzbelüftung nach dem Oberbegriff des Anspruchs 1, eine mobile Arbeitsmaschine mit einer Schutzbelüftung sowie ein Verfahren zum Betreiben einer solchen mobilen Arbeitsmaschine.

Mobile Arbeitsmaschinen werden in einer Vielzahl von Anwendungen eingesetzt. In Form von landwirtschaftlichen Fahrzeugen finden sie beispielsweise ihren Einsatz in der Landwirtschaft. Darüber hinaus gibt es eine Vielzahl von mobilen Arbeitsmaschinen, wie etwa Kräne oder Bagger, die im Baubereich eingesetzt werden. Die WO 2015/159248 A1 zeigt eine solche bekannte Schutzbelüftungsanlage mit Filtern verschiedener Art und verschiedenen Betriebsarten.

Die Arbeitsbedingungen, unter denen die mobilen Arbeitsmaschinen eingesetzt werden, sind ebenfalls sehr unterschiedlich. So können mobile Arbeitsmaschinen durchaus unter Arbeitsbedingungen eingesetzt werden, die für den Fahrzeugführer ein gesundheitliches Risiko darstellen. Beispielsweise kann der Einsatz der mobilen Arbeitsmaschinen in Umgebungen stattfinden, in denen die Außenluft gesundheitsschädlich belastet ist.

Zum Schutz des Fahrzeugführers vor belasteter bzw. kontaminierter Außenluft in der Fahrzeugkabine könnte zwar die Zufuhr von Außenluft in die Fahrzeugkabine vollständig unterbrochen werden, allerdings führt dies jedoch gerade bei länger dauernden Einsätzen zu einem gefährlichen Rückgang des Sauerstoffanteils und einer Erhöhung des CO₂- Anteils in der Raumluft der Fahrzeugkabine. Eine Schutzbelüftung hat die Aufgabe, die Fahrzeugkabine auch in Umgebungen, in denen die Außenluft gesundheitsschädlich belastet ist, mit sauerstoffreicher Luft zu versorgen.

Schutzbelüftungen dienen somit dem Schutz von Fahrzeugführen in Fahrzeugkabinen, wenn die mit der Fahrzeugkabine versehene mobile Arbeitsmaschine in Umgebungen eingesetzt wird, in denen die Außenluft gesundheitsschädlich belastet ist.

Unter anderem werden Schutzbelüftungen bei landwirtschaftlichen Fahrzeugen eingesetzt, wenn Pflanzenschutzmittel ausgebracht werden müssen, damit der Fahrzeugführer nicht der mit Pflanzenschutzmitteln belasteten Außenluft ausgesetzt ist. Weiterhin werden Schutzbelüftungen an Baumaschinen oder Kränen verwendet, wenn sich aufgrund der Arbeiten bzw. aufgrund der äußeren Umgebung Situationen ergeben, in denen die Außenluft gesundheitsschädlich belastet, beispielsweise sehr verstaubt oder sogar kontaminiert ist.

Mit Hilfe der Schutzbelüftungen wird die Außenluft gefiltert, so dass der gesundheitsschädliche Anteil in der Außenluft nicht in die Fahrzeugkabine der mobilen Arbeitsmaschine gelangt. Darüber hinaus sorgt die Schutzbelüftung dafür, dass in der Fahrzeugkabine ein Überdruck herrscht, so dass möglichst wenig kontaminierte Luft in die Fahrzeugkabine eindringen kann.

Die qualitativen Anforderungen an eine Schutzbelüftung richten sich nach den Außenbedingungen. Je stärker die Außenluft verunreinigt ist, desto höher sind die qualitativen Anforderungen an die Schutzbelüftungen und somit an die Filterqualität. Die jeweils notwendige Ausführung der Schutzbelüftung basiert auf Normen wie etwa der DIN EN 15695 für Landmaschinen. In der DIN EN 15695 werden vier Kabinenkategorien unterschieden. In Klasse 1 sind keine Anforderungen an einen Schutz des Fahrzeugführers vorgesehen. In der vierten Klasse werden die größten Anforderungen an den Schutz des Fahrzeugführers gestellt. Ab Klasse 2 ist ein Überdruck in der Kabine von 20 Pa bzw. 50 Pa notwendig. Weiterhin ist in der genannten Norm festgelegt, dass die zugeführte Frischluftmenge in die Kabine mindestens 30 m³/h beträgt.

Je höher die Kabinenkategorie, desto leistungsfähiger und somit auch teurer sind die erforderlichen Filter. Darüber hinaus haben diese Filter einen hohen Strömungswiderstand, so dass die durch diese Filter in die Fahrzeugkabine gelangende Frischluftmenge deutlich geringer ist als bei weniger leistungsfähigen Filtern oder wenn kein Filter verwendet wird.

Da viele mobile Arbeitsmaschinen üblicherweise in gesundheitlich unbedenklichen Umgebungen arbeiten und nur bei bestimmten außergewöhnlichen Situationen in Umgebungen mit einer gesundheitlich belasteten Außenluft eingesetzt werden, besteht somit nicht immer die Notwendigkeit, hochwertige Filter bzw. eine Schutzbelüftung einzusetzen.

So werden Schutzbelüftungen meist nur temporär an einer mobilen Arbeitsmaschine benötigt, nämlich dann, wenn die Außenbedingungen so sind, dass sie für den Fahrzeugführer der mobilen Arbeitsmaschine gesundheitsgefährdend sind.

Bei Einsätzen, bei denen eine sehr hohe Anforderung an den Schutz des Fahrzeugfahrers besteht, wie etwa in der Kabinenkategorie 4, weisen die Luftfilter eine hohe Filterklasse und somit in der Regel einen hohen Luftwiderstand auf. Hierdurch ergeben sich bei längeren Einsätzen unerwünschte Luft- und Druckverhältnisse in dem Kabinenraum der mobilen Arbeitsmaschine, die zusätzliche Maßnahmen erfordern, so dass ein Dauereinsatz solcher Schutzbelüftungen mit hoher Kabinenkategorie unerwünscht ist.

Insbesondere bei vorhersehbaren bzw. planbaren Einsätzen werden daher Schutzbelüftungen gezielt angebaut, um dann nach dem Einsatz wieder abgebaut zu werden.

Diese temporär angebauten Schutzbelüftungen werden bei Bedarf beispielsweise direkt an einen vorhandenen Lufteinlass einer Kabine montiert, wobei sich in der Fahrzeugkabine noch eine Klimaanlage bzw. Heizung befindet. Die Schutzbelüftung ist somit ein Teil der vorhandenen Belüftung bzw. Klimaanlage
Der Auf- und Abbau dieser Schutzbelüftung ist vergleichsweise aufwändig.

Bei einer anderen Lösung ist die Schutzbelüftung an einer zusätzlichen Öffnung in dem Kabinenraum, getrennt von der Öffnung der Originalfrischluftzufuhr, vorgesehen. Die Schutzbelüftung hat keine Verbindung zu einer in der Fahrzeugkabine vorhandenen Belüftung. Im Falle eines Einsatzes in einer gesundheitlich belastenden Umgebung wird die am Fahrzeug vorgesehene Originalfrischluftzufuhr mittels eines Blindblechs verschlossen, so dass die Luft nur noch mittels der Schutzbelüftung in die Fahrzeugkabine gelangen kann. Bei dieser Ausführungsform kann es jedoch zu Fehlbedienungen kommen, da vergessen werden kann, dass der ursprüngliche Lufteintritt verschlossen wird, was dann zu einer unerwünschten Kontamination im Kabinenraum führt. Weiterhin besteht die Gefahr, dass die Schutzbelüftung nicht eingeschaltet wird. In diesem Fall kann dies zu einem Sauerstoffmangel in der Fahrkabine führen. Darüber hinaus fehlt bei dieser Ausführungsform die Möglichkeit, eine Klima-/ Heizanlage zu verwenden, was zum einen zu einer Überhitzung in heißer Umgebung und zum anderen zu einer Unterkühlung in kalter Umgebung führen kann.

Schließlich besteht auch die Möglichkeit, zwei verschiedenartige Filter dauerhaft an der mobilen Arbeitsmaschine zu installieren. Ein Filter dient für Arbeiten bei geringer Außenbelastung, ein anderer Filter wird verwendet, wenn die Außenluft hoch belastet ist. Der jeweils nicht benötigte Filter wird mit einer verstellbaren Klappe verschlossen. Diese Ausführungsform ist zwar vergleichsweise flexibel in unterschiedlichen Arbeitsbedingungen einsetzbar, hat jedoch den Nachteil, teuer zu sein, da immer zwei Filter in der mobilen Arbeitsmaschine installiert sind. Darüber hinaus besteht die Gefahr, dass der jeweils nicht benötigte Filter und die Klappe unnötig verschmutzen, so dass eine dichtende Abdeckung nicht mehr gegeben ist.

Es ist Aufgabe der vorliegenden Erfindung, eine Schutzbelüftung bereitzustellen, die sowohl unter normalen als auch unter gesundheitlich belastenden Arbeitsbedingungen eingesetzt werden kann, wobei der Arbeitsaufwand zur Anpassung der Schutzbelüftung an die Arbeitsbedingungen minimal sein soll. Weiterhin ist es Aufgabe der Erfindung, eine mobile Arbeitsmaschine mit einer Schutzbelüftung bereitzustellen, die größtmöglichen Komfort für den Fahrer bietet, wobei die Schutzbelüftung kostengünstig und einfach bedienbarbar ist.

Schließlich ist es Aufgabe der vorliegenden Erfindung, ein Verfahren zum Betreiben einer mobilen Arbeitsmaschine mit einer Schutzbelüftung bereitzustellen, welches es ermöglicht, die mobile Arbeitsmaschine sowohl unter normalen als auch unter gesundheitlich belastender Umgebung einzusetzen.

Erfindungsgemäß wird die Aufgabe gelöst durch eine Schutzbelüftung gemäß Anspruch 1, umfassend ein Gehäuse mit einem Lufteinlass und einem Luftauslass, wobei der Luftauslass mit einem Lufteintritt eines Kabinenraums für einen Fahrzeugführer verbindbar ist, wobei die Schutzbelüftung einen ersten Durchgang und einen zweiten Durchgang aufweist, durch die Frischluft gelangt, wobei der erste Durchgang und der zweite Durchgang den Lufteinlass bilden und wobei ein Filter erster Art und ein Filter zweiter Art vorgesehen sind, dadurch gekennzeichnet, dass im Gehäuse der Schutzbelüftung hinter dem zweiten Durchgang ein Ventilator vorgesehen ist, und dass die Schutzbelüftung eine erste Betriebsart aufweist, in der der Filter erster Art in oder an dem ersten Durchgang angeordnet ist und den zweiten Durchgang verschließt sowie eine zweite Betriebsart, in der der Filter zweiter Art in oder an dem Durchgang zweiter Art angeordnet ist und den Durchgang erster Art verschließt.

Bei der ersten Betriebsart handelt es sich um eine Betriebsart unter normalen Außenluftbedingungen. Die zweite Betriebsart ist die Betriebsart unter gesundheitlich belastender Außenluft.

Diese Art von Schutzbelüftung bietet den Vorteil, dass sie flexibel an verschiedene Umgebungsbedingungen angepasst werden kann und keine Umbaumaßnahmen an der mobilen Arbeitsmaschine erforderlich sind. Da es sich um ein Filterwechselsystem handelt, müssen bei Änderung der Arbeitsbedingungen nur die Filter in der Schutzbelüftung ausgetauscht werden. Der Austausch der Filter in der Schutzbelüftung lässt sich in der Regel einfach durchführen.

Es ist bekannt, dass bei gleicher maximal zulässiger Luftmenge Filter einer höheren Filterklasse eine größere Baugröße aufweisen als Filter einer geringeren Filterklasse.

Um einen möglichst kompakten Aufbau der Schutzbelüftung zu erhalten, ist es von Vorteil, dass der Filter erster Art und der Filter zweiter Art bauliche Außenmaße aufweisen, die in einem ähnlichen Bereich liegen. Hierdurch ergeben sich Unterschiede in der maximal zulässigen Luftmenge, wenn unterschiedliche Filterklassen bei dem Filter erster Art und dem Filter zweiter Art verwendet werden.

So ist die maximal zulässige Luftmenge durch den Filter erster Art höher als die maximal zulässige Luftmenge durch den Filter zweiter Art. Der Unterschied in der zulässigen Luftmenge zwischen dem Luftfilter erster Art und dem Luftfilter zweiter Art kann beispielsweise um einen Faktor 2 oder mehr höher liegen.

Vorzugsweise ist der Filter erster Art ein Filter der Grobstaubklasse und der Filter zweiter Art ein Filter der Schwebstofffilterklasse, so dass mit Hilfe der unterschiedlichen Filter eine Kabinenkategorie von 2 oder 3 erreicht werden kann. Es versteht sich, dass der Filter zweiter Art neben einem Schwebstofffilter auch einen Grobstaubfilter oder gegebenenfalls sogar einen Gasfilter umfassen kann, so dass auch die Kabinenkategorie 4 umgesetzt werden kann. Gemäß einer bevorzugten Ausführungsform sind der Filter erster Art und der Filter zweiter Art lösbar im jeweils entsprechenden Durchgang angeordnet. Dadurch lässt sich die Schutzbelüftung einfach umbauen.

Um die Schutzbelüftung unter unterschiedlichsten Bedingungen einsetzen zu können, in denen unterschiedliche Anforderungen an die Filter gestellt werden, ist es von Vorteil, dass der Filter erster Art und/oder der Filter zweiter Art mittels eines Adapters in dem jeweils entsprechenden Durchgang angeordnet sind.

Erfindungsgemäß ist vorgesehen, dass der Filter erster Art den Durchgang zweiter Art verschließt und dass der Filter zweiter Art den Durchgang erster Art verschließt. Hierdurch kann die Anzahl der notwendigen Bauteile auf ein Minimum reduziert werden.

Vorzugsweise ist der Ventilator in der Schutzbelüftung regelbar, um die Luftmenge in dem Kabinenraum zu regeln.

Gegenstand der Erfindung ist auch eine mobile Arbeitsmaschine gemäß Anspruch 8, umfassend einen Kabinenraum und einen Lufteintritt in den Kabinenraum, wobei eine Schutzbelüftung nach einem der vorhergehenden Ansprüche an der mobilen Arbeitsmaschine montiert ist und wobei der Luftauslass der Schutzbelüftung mit dem Lufteintritt der mobilen Arbeitsmaschine verbunden ist.

Vorzugsweise sind in dem Kabineninnenraum eine Klimaanlage und/oder eine Ansaugvorrichtung vorgesehen, wobei die Klimaanlage und/oder die Ansaugvorrichtung vorzugsweise ein regelbares Gebläse aufweisen. Die Klimaanlage und/oder die Ansaugvorrichtung ermöglichen es dem in dem Kabinenraum befindlichen Maschinenführer, angenehme Umgebungsbedingungen zu schaffen. Es versteht sich, dass die Klimaanlage nicht nur zum Kühlen des Kabineninnenraums, sondern auch zum Erwärmen des Kabineninnenraums verwendet werden kann. Bei dieser Ausführungsform ist die Schutzbelüftung somit Teil der Klimatisierung des Kabinenraums

Bei einer bevorzugten Weiterbildung ist vorgesehen, dass der Ventilator in der Schutzbelüftung regelbar ist, dass in dem Kabinenraum eine Klimaanlage und/oder eine Ansaugvorrichtung mit einem regelbaren Gebläse vorgesehen sind und dass eine Regel- und/oder Steuervorrichtung vorgesehen sind, so dass die Luftmenge in dem Kabinenraum in Abhängigkeit von der Drehzahl des Ventilators in der Schutzbelüftung und der Drehzahl des Gebläses der Klimaanlage und/oder der Ansaugvorrichtung regelbar bzw. steuerbar sind. Hierdurch können optimale Bedingungen in dem Kabinenraum eingestellt werden.

Bei einer kostengünstigen Variante ist eine Regelsteuereinrichtung vorgesehen, die die Luftmenge im Kabinenraum nur in der zweiten Betriebsart mit Hilfe des Ventilators in der Schutzbelüftung regelt/steuert.

Um Bedienfehler zu vermeiden, ist es von Vorteil, dass eine Überwachungsvorrichtung, insbesondere ein Sensor zur Filterkennung vorgesehen ist, die die Art des Filters erfasst.

Bei einer bevorzugten Ausführungsform ist die Schutzbelüftung über einen Luftschlauch oder Luftkanal mit dem Lufteintritt verbunden. Alternativ kann die Schutzbelüftung direkt mit dem Lufteintritt verbunden sein, insbesondere an den Lufteintritt angeflanscht sein.

Inhalt der vorliegenden Erfindung ist ein Verfahren zum Betreiben einer mobilen Arbeitsmaschine gemäß Anspruch 14 mit einer Schutzbelüftung, wobei sich die mobile Arbeitsmaschine in der zweiten Betriebsart befindet, wobei eine Regel- und/oder Steuervorrichtung und eine Klimaanlage mit einem regelbaren Gebläse in dem Kabinenraum vorgesehen sind. Das Verfahren ist durch folgende Schritte gekennzeichnet. Zunächst wird in dem Kabinenraum ein Innendruck mit einem vorgegebenen Mindestdruck festgelegt. Anschließend wird die höchste Leistungsstufe des Gebläses der Klimaanlage so gewählt, dass sie der maximal zulässigen Luftmenge durch den Filter zweiter Art entspricht, wenn der Ventilator ausgeschaltet ist. Die Regel- und/oder Steuervorrichtung schaltet und regelt den Ventilator in der Schutzbelüftung, wenn das Gebläse in dem Kabinenraum eine geringere als die höchste Leistungsstufe aufweist.

Die Tatsache, dass die höchste Leistungsstufe des Gebläses so gewählt ist, dass sie der maximal zulässigen Luftmenge durch den Filter zweiter Art entspricht, hat den Vorteil, dass die maximal zulässige Luftmenge durch den Filter zweiter Art niemals überschritten wird, so dass der Filter zweiter Art nicht versehentlich außerhalb seines Schutzwirkungsbereichs betrieben wird. Wenn das Gebläse in dem Kabinenraum jedoch eine geringere als die höchste Leistungsstufe aufweist, führt dies dazu, dass gegebenenfalls aufgrund des hohen Luftwiderstandes des Filters zweiter Art nicht mehr genügend Luft in den Kabinenraum gelangt. Um dennoch eine ausreichende Luftmenge in dem Kabineninnenraum bereitzustellen, wird der Ventilator eingeschaltet und geregelt, um die notwendige Außenluft anzusaugen, so dass der erforderliche Mindestluftdruck in dem Kabinenraum herrscht.

Es versteht sich, dass die gesamte Luftmenge, die vom Ventilator und vom Gebläse angesaugt wird, nicht die maximal zulässige Luftmenge durch den Filter zweiter Art überschreitet.

Bei dieser Ausführungsform besteht die Möglichkeit, Filter mit vergleichsweise kleinen Außenmaßen einzusetzen, die zwar die notwendige Filtereffizienz aufweisen, jedoch nur eine geringe Luftmenge durchlassen.

Bei einer Weiterbildung des Verfahrens wird von der zweiten Betriebsart zu der ersten Betriebsart gewechselt, so dass sich in der Schutzbelüftung ein Filter erster Art befindet. Bei dieser Ausführungsform wird das Gebläse der Klimaanlage über den gesamten Leistungsbereich der Klimaanlage geregelt. Während in der zweiten Betriebsart nur eine begrenzte Leistung der Klimaanlage in der Fahrzeugkabine zur Verfügung steht, kann in der ersten Betriebsart der Fahrer wieder auf das gesamte Leistungsvermögen der Klimaanlage zurückgreifen. Dies hat den Vorteil, dass unter normalen Arbeitsbedingungen insbesondere an heißen Tagen eine aufgeheizte Fahrzeugkabine sehr schnell heruntergekühlt werden kann.

Bei dieser Ausführungsform ist es nicht notwendig, dass der Ventilator in der Schutzbelüftung eingeschaltet wird. Die Trennung des Durchlasses erster Art vom Durchlass zweiter Art hat somit den Vorteil, dass in der ersten Betriebsart der stillstehende Ventilator nicht mit Staubpartikel beladen wird, da er nicht im Strömungsweg der durch die Schutzbelüftung hindurchströmenden Frischluft steht. Im Übrigen würde ein Ventilator im Bereich des Durchlasses erster Art den Strömungswiderstand durch die Schutzbelüftung in unnötiger Weise erhöhen.

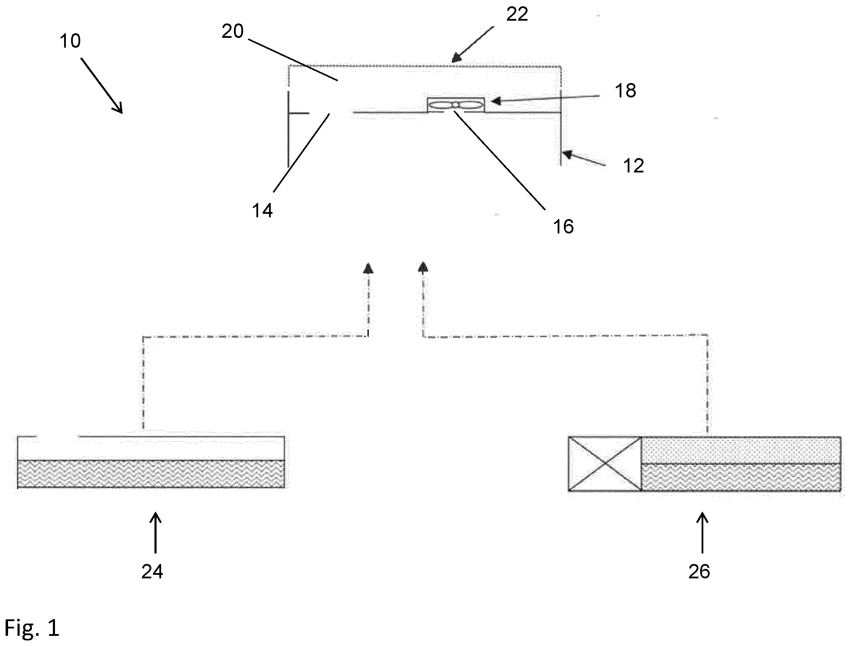

Bevorzugte Ausführungsformen werden anhand der beigefügten Zeichnung näher erläutert, in der die einzige Figur (Fig. 1) eine schematische Darstellung einer Schutzbelüftung darstellt.

Die Figur 1 zeigt eine Schutzbelüftung 10, die an eine mobile Arbeitsmaschine wie etwa ein landwirtschaftliches Fahrzeug, beispielsweise einen Traktor, ein Baufahrzeug oder einen Kran, befestigt werden kann.

Die Schutzbelüftung 10 umfasst ein Gehäuse 12 mit einem Durchgang erster Art 14 und einem Durchgang zweiter Art 16. In dem Gehäuse 12 hinter dem Durchgang zweiter Art 16 befindet sich ein Ventilator 18. Der Durchgang erster Art 14 und der Durchgang zweiter Art 16 sind an der gleichen Gehäuseseite der Schutzbelüftung 10 vorgesehen. Der Durchgang erster Art 14 und der Durchgang zweiter Art 16 bilden den Lufteinlass. Der Luftauslass 20 ist an dem Gehäuse an der Seite vorgesehen, die entgegengesetzt zu der Seite liegt, an der der Lufteinlass vorgesehen ist.

Die Schutzbelüftung 10 ist im Bereich des Lufteintritts 22 (schematisch dargestellt) einer nicht dargestellten mobilen Arbeitsmaschine befestigt. Im dargestellten Fall ist der Luftauslass der Schutzbelüftung 10 direkt an den Lufteintritt 22 der mobilen Arbeitsmaschine angeflanscht. Alternativ ist ein Luftschlauch oder ein Luftkanal vorgesehen, der den Luftauslass der Schutzbelüftung mit dem Lufteintritt der mobilen Arbeitsmaschine verbindet.

Weiterhin sind ein Filter erster Art 24 und ein Filter zweiter Art 26 vorgesehen. Der Filter erster Art 24 ist ein Grobstaubfilter der Grobstaubklasse. Der Filter zweiter Art 26 ist ein Filter der Schwebstofffilterklasse und umfasst einen Grobstaubfilter und einen Schwebstofffilter sowie einen Gasfilter. Der Filter erster Art 24 und der Filter zweiter Art 26 weisen bauliche Außenmaße auf, die in einem ähnlichen Größenbereich liegen. Hierdurch ergeben sich unterschiedliche Luftmengen, die durch den Filter erster Art 24 und den Filter zweiter Art 26 strömen können. Während bei dem Filter erster Art 24 sehr hohe Luftmengen strömen können, ist die maximal zulässige Luftmenge durch den Filter zweiter Art 26 stark reduziert. Beispielsweise kann durch den Filter erster Art 24 eine Luftmenge von 180 m³/h strömen, während durch den Filter zweiter Art 26 nur eine zulässige Luftmenge von 30 m³/h erlaubt ist.

Der Filter erster Art 24 ist ausgelegt, um an oder in dem Durchgang erster Art 14 lösbar befestigt zu werden. Der Filter zweiter Art 26 wird in dem Durchgang zweiter Art 16 bzw. an dem Durchgang zweiter Art 16 vor dem Ventilator 18 befestigt.

Die Schutzbelüftung unterscheidet zwei Betriebsarten, nämlich eine erste Betriebsart, die unter normalen Außenluftbedingungen erfolgt. Die zweite Betriebsart erfolgt unter gesundheitlich belastender Außenluft.

Im Falle der ersten Betriebsart befindet sich der Filter erster Art 24 in dem Durchgang erster Art 14. Der Durchgang zweiter Art 16 ist verschlossen.

In der zweiten Betriebsart ist der Durchgang erster Art 14 verschlossen und der Filter zweiter Art 26 befindet sich in oder an dem Durchgang zweiter Art 16.

Der Filter erster Art 24 und/oder der Filter zweiter Art 26 sind hierbei so gestaltet, dass sie in den dafür vorgesehenen Durchgang erster Art 14 oder Durchgang zweiter Art 16 eingesetzt werden können und dabei gleichzeitig den jeweils anderen Durchgang verschließen. Es versteht sich, dass auch ein Filter erster Art und/oder ein Filter zweiter Art verwendet werden können, die nicht den jeweils anderen Durchgang verschließen. Stattdessen können separate Verschlusselemente vorgesehen sein, die den entsprechenden Durchgang verschließen.

Der Filter erster Art 24 und der Filter zweiter Art 26 sind jeweils lösbar in den entsprechenden Durchgängen erster und zweiter Art 14 ,16 angeordnet. Falls notwendig, sind entsprechende Adapter vorgesehen, um den Filter erster Art 24 bzw. den Filter zweiter Art 26 in dem jeweiligen Durchgang erster Art 14 bzw. Durchgang zweiter Art 16 sicher zu befestigen.

Wenn auch nicht dargestellt, so umfasst die mobile Arbeitsmaschine einen Kabinenraum und eine Klimaanlage mit einem Gebläse zur Klimatisierung des Kabinenraums, insbesondere zur Kühlung und Erwärmung des Kabinenraums. Weiterhin ist eine nicht dargestellte Regel- bzw. Steuervorrichtung vorgesehen, die die Drehzahl des Ventilators 18 bzw. des Gebläses der Klimaanlage regelt bzw. steuert.

In der ersten Betriebsart befindet sich der Filter erster Art 24 in dem Durchgang erster Art 14. Da es sich hier um einen Grobstaubfilter handelt, gelangt die Luft ohne großen Widerstand in das Innere der Schutzbelüftung 10 und kann von dem Gebläse der Klimaanlage in den Kabinenraum gezogen werden. In diesem Fall können große Luftmengen in den Kabinenraum geführt werden. Große Luftmengen sind beispielsweise dann notwendig, wenn aufgeheizte Kabinenräume schnell abgekühlt werden sollen.

In der zweiten Betriebsart befindet sich der Filter zweiter Art 26 in dem Durchgang zweiter Art 16. Da der Filter zweiter Art 26 einen sehr hohen Luftwiderstand hat, kann die Klimaanlage selbst bei höchster Leistung nur eine begrenzte Luftmenge in den Kabinenraum ziehen.

Um zusätzlich zu verhindern, dass der Filter zweiter Art 26 außerhalb seines Schutzwirkungsbereichs betrieben wird, wird die maximale Leistung der Klimaanlage an die maximal zulässige Luftmenge durch den Filter zweiter Art 26 angepasst.

Es versteht sich, dass durch die Größe des Filters zweiter Art die maximal zulässige Luftmenge verändert werden kann. Aus baulichen Gründen ist es jedoch nicht erstrebenswert, einen besonders großen Filter, der eine möglichst große Luftmenge durchlässt, in die Schutzbelüftung einzubauen. Es ist somit wie oben angegeben davon auszugehen, dass die Luftmenge, die durch den Filter zweiter Art hindurchgeht, deutlich geringer ist als die Luftmenge, die durch den Filter erster Art bei vergleichbarer Baugröße hindurchgeht.

Beim Betreiben der mobilen Arbeitsmaschine kann es erwünscht sein, die an den Filter zweiter Art 26 angepasste maximale Leistung des Gebläses der Klimaanlage zu reduzieren, um beispielsweise eine höhere Kühlleistung in der Fahrzeugkabine zu erhalten. Dies führt dazu, dass die Leistung des Gebläses nicht mehr ausreicht, um die maximale durch den Filter zweiter Art 26 zulässige Luftmenge hindurch zu transportieren. Um dennoch die maximal mögliche Luftmenge durch den Filter zweiter Art 26 und somit in das Innere der Schutzbelüftung 10 und anschließend in den Kabinenraum zu bringen, ist der Ventilator 18 in dem Gehäuse 12 vorgesehen. Der Ventilator 18 wird von der Regel- und/oder Steuervorrichtung eingeschaltet, sobald die auf den Filter zweiter Art 26 angepasste maximale Leistung des Gebläses reduziert wird. Hierdurch ist es möglich, die Mindestluftmenge in jedem Betriebspunkt zu gewährleisten und darüber hinaus die Temperatur im Kabinenraum auch in der zweiten Betriebsart zu regeln.

Um zu verhindern, dass es insbesondere in der zweiten Betriebsart versehentlich zu Bedienfehlern kommt, ist eine Überwachungsvorrichtung, insbesondere ein Sensor zur Filtererkennung vorgesehen, die/der die Art des Filters erfasst.

Das beschriebene Verfahren findet beispielsweise in der Landwirtschaft Anwendung, wenn Pflanzenschutzmittel ausgebracht werden. Werden Pflanzenschutzmittel ausgebracht, befindet sich das landwirtschaftliche Fahrzeug in der zweiten Betriebsart. Da Pflanzenschutzmittel nur bei moderaten Außentemperaturen verteilt werden dürfen, besteht keine Notwendigkeit, die Fahrzeugkabine aufgrund von Überhitzung rasch abkühlen zu müssen. Die Leistung der Klimaanlage kann im Wesentlichen dazu verwendet zu werden, die notwendige Luftmenge durch den Filter zweiter Art in den Innenraum der Fahrzeugkabine zu ziehen. Geringe Temperaturschwankungen in der Fahrzeugkabine, die auf Wunsch des Fahrers von der Klimaanlage ausgeglichen werden und dazu führen, dass die notwendige Luftmenge nicht mehr in das Innere der Fahrzeugkabine gezogen werden, können durch den Ventilator in der Schutzbelüftung kompensiert werden.

Der Wechsel von der ersten Betriebsart zur zweiten Betriebsart ist einfach durchzuführen, da nur ein Filterwechsel und kein Anbau der Schutzbelüftung notwendig ist. Fehlbedienungen können aufgrund der Automatisierung der Steuerung/Regelung vermieden werden. Da die teuren Filter zweiter Art nur bei Bedarf verwendet werden, ist die Schutzbelüftung im Unterhalt vergleichsweise günstig.

## Patentansprüche

1. Schutzbelüftung umfassend ein Gehäuse (12) mit einem Lufteinlass (14, 16) und einem Luftauslass (20), wobei der Luftauslass (20) mit einem Lufteintritt (22) eines Kabinenraums für einen Fahrzeugführer verbindbar ist, wobei die Schutzbelüftung (10) einen ersten Durchgang (14) und einen zweiten Durchgang (16) aufweist, durch die Frischluft gelangt, wobei der erste Durchgang (14) und der zweite Durchgang (16) den Lufteinlass bilden und wobei ein Filter erster Art (24) und ein Filter zweiter Art (26) vorgesehen sind, **dadurch gekennzeichnet, dass** im Gehäuse (12) der Schutzbelüftung (10) hinter dem zweiten Durchgang (14) ein Ventilator (18) vorgesehen ist, und dass die Schutzbelüftung (10) eine erste Betriebsart aufweist, in der der Filter erster Art (24) in oder an dem ersten Durchgang (14) angeordnet ist und den zweiten Durchgang (16) verschließt sowie eine zweite Betriebsart, in der der Filter zweiter Art (26) in oder an dem Durchgang zweiter Art (16) angeordnet ist und den Durchgang erster Art (14) verschließt.

2. Schutzbelüftung nach Anspruch 1, **dadurch gekennzeichnet, dass** die erste Betriebsart die Betriebsart unter normalen Außenluftbedingungen ist und die zweite Betriebsart die Betriebsart unter gesundheitlich belastender Außenluft ist.

3. Schutzbelüftung nach einem der vorhergehenden Ansprüche, **dadurch gekennzeichnet, dass** die maximal zulässige Luftmenge durch den Filter erster Art (24) höher als die maximal zulässige Luftmenge durch den Filter zweiter Art (26) ist.

4. Schutzbelüftung nach einem der vorhergehenden Ansprüche, **dadurch gekennzeichnet, dass** der Filter erster Art (24) ein Filter der Grobstaubklasse ist und der Filter zweiter Art ein Filter (26) der Schwebstofffilterklasse ist, wobei der Filter zweiter Art (26) vorzugsweise zusätzlich einen Grobstaubfilter und/oder einen Gasfilter umfasst.

5. Schutzbelüftung nach einem der vorhergehenden Ansprüche, **dadurch gekennzeichnet, dass** der Filter erster Art (24) lösbar im ersten Durchgang (14) und der Filter zweiter Art (26) lösbar im zweiten Durchgang (16) angeordnet sind.

6. Schutzbelüftung nach einem der vorhergehenden Ansprüche, **dadurch gekennzeichnet, dass** der Filter erster Art (24) mittels eines Adapters im ersten Durchgang (14) und/oder der Filter zweiter Art (26) mittels eines Adapters im zweiten Durchgang (16) angeordnet sind.

7. Schutzbelüftung nach einem der vorhergehenden Ansprüche, **dadurch gekennzeichnet, dass** der Ventilator (18) in der Schutzbelüftung (10) regelbar ist.

8. Mobile Arbeitsmaschine umfassend einen Kabinenraum und einen Lufteintritt (22) in den Kabinenraum, **dadurch gekennzeichnet, dass** eine Schutzbelüftung (10) nach einem der vorhergehenden Ansprüche an der mobilen Arbeitsmaschine montiert ist, wobei der Luftauslass (20) der Schutzbelüftung (10) mit dem Lufteintritt (22) verbunden ist.

9. Mobile Arbeitsmaschine nach Anspruch 8, **dadurch gekennzeichnet, dass** in dem Kabinenraum eine Klimaanlage und/oder eine Ansaugvorrichtung vorgesehen sind, wobei die Klimaanlage und/oder die Ansaugvorrichtung vorzugsweise ein regelbares Gebläse aufweist.

10. Mobile Arbeitsmaschine nach Anspruch 9, **dadurch gekennzeichnet, dass** der Ventilator (18) in der Schutzbelüftung (10) regelbar ist und dass eine Regel- und/oder Steuervorrichtung vorgesehen ist, um die Luftmenge in dem Kabinenraum in Abhängigkeit von der Drehzahl des Ventilators (18) in der Schutzbelüftung (10) und der Drehzahl des Gebläses der Klimaanlage und/oder der Ansaugvorrichtung zu regeln bzw. zu steuern.

11. Mobile Arbeitsmaschine nach Anspruch 10, **dadurch gekennzeichnet, dass** eine Regel- und/oder Steuervorrichtung vorgesehen ist, die die Luftmenge im Kabinenraum nur in der zweiten Betriebsart mit Hilfe des Ventilators (18) in der Schutzbelüftung (10) regelt/steuert.

12. Mobile Arbeitsmaschine nach einem der Ansprüche 8 bis 11, **dadurch gekennzeichnet, dass** eine Überwachungsvorrichtung, insbesondere ein Sensor zur Filtererkennung vorgesehen ist, die die Art des Filters erfasst.

13. Mobile Arbeitsmaschine nach einem der Ansprüche 8 bis 12, **dadurch gekennzeichnet, dass** die Schutzbelüftung (10) über einen Luftschlauch oder Luftkanal mit dem Lufteintritt verbunden ist oder direkt mit dem Lufteintritt verbunden, insbesondere angeflanscht ist.

14. Verfahren zum Einstellen einer mobile Arbeitsmaschine nach einem der Ansprüche 8 bis 13, wobei die mobile Arbeitsmaschine einen Kabinenraum und eine Regel- und Steuervorrichtung umfasst, wobei eine Klimaanlage mit einem regelbaren Gebläse in dem Kabinenraum vorgesehen ist und wobei sich die mobile Arbeitsmaschine in der zweiten Betriebsart befindet, **dadurch gekennzeichnet,**
**dass** in dem Kabinenraum ein Innendruck mit einem vorgegebenen Mindestdruck festgelegt wird,
**dass** die höchste Leistungsstufe des Gebläses der Klimaanlage so gewählt wird, dass sie der maximal zulässigen Luftmenge durch den Filter zweiter Art (26) entspricht, wenn der Ventilator (18) ausgeschalten ist, und dass
die Regel- und/oder Steuervorrichtung den Ventilator (18) in der Schutzbelüftung (10) einschaltet und regelt, wenn das Gebläse in dem Kabinenraum eine geringere als die höchste Leistungsstufe aufweist.

15. Verfahren zum Betreiben einer mobilen Arbeitsmaschine nach Anspruch 14, **dadurch gekennzeichnet, dass** von der zweiten Betriebsart zu der ersten Betriebsart gewechselt wird, so dass sich in der Schutzbelüftung (10) ein Filter erster Art (24) befindet, und dass das Gebläse der Klimaanlage über den gesamten Leistungsbereich der Klimaanlage geregelt wird.

## Claims

1. A protective ventilation comprising a housing (12) with an air inlet (14, 16) and an air outlet (20), wherein the air outlet (20) is connectable to an air entrance (22) of a cabin space for a vehicle driver, wherein the protective ventilation (10) has a first passage (14) and a second passage (16) through which fresh air passes, wherein the first passage (14) and the second passage (16) form an air entrance and wherein a filter of the first type (24) and a filter of the second type (26) are provided, **characterized in that** a fan (18) is provided in the housing (12) of the protective ventilation (10) behind the second passage (14), and **in that** the protective ventilation (10) has a first operating mode in which the filter of the first type (24) is arranged in or on the first passage (14) and closes the second passage (16), and a second operating mode in which the filter of the second type (26) is arranged in or on the passage of the second type (16) and closes the passage of the first type (14).

2. The protective ventilation according to claim 1, **characterized in that** the first operating mode is the operating mode under normal outside air conditions and the second operating mode is the operating mode under outside air affecting the health.

3. The protective ventilation according to one of the preceding claims, **characterized in that** the maximum permissible air quantity through the filter of the first type (24) is higher than the maximum permissible air quantity through the filter of the second type (26).

4. The protective ventilation according to one of the preceding claims, **characterized in that** the filter of the first type (24) is a filter of the coarse dust class and the filter of the second type (26) is a filter of the high-efficiency particulate air class, wherein the filter of the second type (26) preferably additionally comprises a coarse dust filter and/or a gas filter.

5. The protective ventilation according to one of the preceding claims, **characterized in that** the filter of the first type (24) is detachably arranged in the first passage (14) and the filter of the second type (26) is detachably arranged in the second passage (16).

6. The protective ventilation according to one of the preceding claims, **characterized in that** the filter of the second type (24) is arranged in the first passage (14) by means of an adapter and/or the filter of the second type (26) is arranged in the second passage (16) by means of an adapter.

7. The protective ventilation according to one of the preceding claims, **characterized in that** the fan (18) in the protective ventilation (10) is adjustable.

8. A mobile work machine comprising a cabin space and an air entrance (22) into the cabin space, **characterized in that** a protective ventilation (10) according to one of the preceding claims is mounted on the mobile work machine, wherein the air outlet (20) of the protective ventilation (10) is connected to the air entrance (22).

9. The mobile work machine according to claim 8, **characterized in that** an air conditioner and/or an intake device are provided in the cabin space, wherein the air conditioner and/or the intake device preferably have an adjustable blower.

10. The mobile work machine according to claim 9, **characterized in that** the fan (18) in the protective ventilation (10) is adjustable and that an adjustment and/or a control device is provided in order to adjust or control the air quantity in the cabin space depending on speed of the fan (18) in the protective ventilation (10) and the speed of the blower of the air conditioner and/or the intake device.

11. The mobile work machine according to claim 10, **characterized in that** an adjustment and/or a control device is provided which adjusts/controls the air quantity in the cabin space only in the second operating mode by means of the fan (18) in the protective ventilation (10).

12. The mobile work machine according to one of the claims 8 to 11, **characterized in that** a monitoring device, particularly a sensor for filter detection, is provided, detecting the type of filter.

13. The mobile work machine according to one of the claims 8 to 12, **characterized in that** the protective ventilation (10) is connected to the air entrance via an air hose or an air duct or is directly connected to the air entrance, particularly flange-mounted.

14. A method for adjusting a mobile work machine according to one of the claims 8 to 13, wherein the mobile work machine comprises a cabin space and an adjustment and control device, wherein an air conditioner with an adjustable blower is provided in the cabin space and wherein the mobile work machine is in the second operating mode, **characterized in that**
an internal pressure with a predefined minimum pressure is set in the cabin space,
the highest performance level of the blower of the air conditioner is selected in a way that is corresponds to the maximum permissible air quantity through the filter of the second type (26), when the fan (18) is switched off, and **in that** the adjustment and/or control device switches on and adjusts the fan (18) in the protective ventilation (10) if the blower in the cabin space has a lower performance level than the highest one.

15. The method for operating a mobile work machine according to claim 14, **characterized in that** a switch is made from the second operating mode to the first operating mode, so that a filter of the first type (24) is in the protective ventilation (10) and the blower of the air conditioner is adjusted over the entire performance range of the air conditioner.

## Revendications

1. Ventilation de protection comprenant un boîtier (12) avec une entrée d'air (14, 16) et une sortie d'air (20), la sortie d'air (20) pouvant être reliée à une entrée d'air (22) d'un espace de cabine de conducteur de véhicule, la ventilation de protection (10) comprenant un premier passage (14) et un second passage (16) à travers lesquels circule de l'airfrais, le premier passage (14) et le second passage (16) formant l'entrée d'air, et un filtre d'un premier type (24) et un filtre d'un second type (26) étant prévus, **caractérisée en ce qu'**un ventilateur (18) est prévu dans le boîtier (12) de la ventilation de protection (10) derrière le second passage (14) et **en ce que** la ventilation de protection (10) présente un premier mode de fonctionnement dans lequel le filtre du premier type (24) est agencé dans ou sur le premier passage (14) et ferme le second passage (16), et un second mode de fonctionnement dans lequel le filtre du second type (26) est agencé dans ou sur le second passage (16) et ferme le premier passage (14).

2. Ventilation de protection selon la revendication 1, **caractérisée en ce que** le premier mode de fonctionnement est le mode de fonctionnement dans des conditions d'air extérieur normales et le second mode de fonctionnement est le mode de fonctionnement en cas d'air extérieur nocif.

3. Ventilation de protection selon l'une quelconque des revendications précédentes, **caractérisée en ce que** la quantité d'air maximale admissible à travers le filtre du premier type (24) est supérieure à la quantité d'air maximale admissible à travers le filtre du second type (26).

4. Ventilation de protection selon l'une quelconque des revendications précédentes, **caractérisée en ce que** le filtre du premier type (24) est un filtre de la classe des grosses poussières et le filtre du second type (26) est un filtre de la classe des filtres à très haute efficacité THE, le filtre du second type (26) comprenant de manière préférée en supplément un filtre à grosses poussières et/ou un filtre à gaz.

5. Ventilation de protection selon l'une quelconque des revendications précédentes, **caractérisée en ce que** le filtre du premier type (24) est agencé de manière amovible dans le premier passage (14) et le filtre du second type (26) est agencé de manière amovible dans le second passage (16).

6. Ventilation de protection selon l'une quelconque des revendications précédentes, **caractérisée en ce que** le filtre du premier type (24) est agencé dans le premier passage (14) au moyen d'un adaptateur et/ou le filtre du second type (26) est agencé dans le second passage (16) au moyen d'un adaptateur.

7. Ventilation de protection selon l'une quelconque des revendications précédentes, **caractérisé en ce que** le ventilateur (18) de la ventilation de protection (10) peut être réglé.

8. Machine de travail mobile comprenant un espace de cabine et une entrée d'air (22) dans l'espace de cabine, **caractérisée en ce qu'**une ventilation de protection (10) selon l'une quelconque des revendications précédentes est montée sur la machine de travail mobile, la sortie d'air (20) de la ventilation de protection (10) étant reliée à l'entrée d'air (22).

9. Machine de travail mobile selon la revendication 8, **caractérisée en ce qu'**un système de climatisation et/ou un dispositif d'aspiration est/sont prévu(s) dans l'espace de cabine, le système de climatisation et/ou le dispositif d'aspiration présentant de manière préférée une soufflante réglable.

10. Machine de travail mobile selon la revendication 9, **caractérisée en ce que** le ventilateur (18) de la ventilation de protection (10) est réglable et **en ce qu'**un dispositif de réglage et/ou de commande est prévu afin de régler ou commander la quantité d'air dans l'espace de cabine en fonction de la vitesse de rotation du ventilateur (18) de la ventilation de protection (10) et de la vitesse de rotation de la soufflante du système de climatisation et/ou du dispositif d'aspiration.

11. Machine de travail mobile selon la revendication 10, **caractérisée en ce qu'**un dispositif de réglage et/ou de commande est prévu, qui règle/commande la quantité d'air dans l'espace de cabine à l'aide du ventilateur (18) de la ventilation de protection (10) uniquement dans le second mode de fonctionnement.

12. Machine de travail mobile selon l'une quelconque des revendications 8 à 11, **caractérisée en ce qu'**un dispositif de surveillance, en particulier un capteur de détection de filtre détectant le type du filtre est prévu.

13. Machine de travail mobile selon l'une quelconque des revendications 8 à 12, **caractérisée en ce que** la ventilation de protection (10) est reliée à l'entrée d'air par l'intermédiaire d'un tuyau d'air ou d'un canal d'air ou est reliée directement à l'entrée d'air, en particulier par une bride.

14. Procédé d'ajustement d'une machine de travail mobile selon l'une quelconque des revendications 8 à 13, dans lequel la machine de travail mobile comprend un espace de cabine et un dispositif de réglage et de commande, un système de climatisation comprenant une soufflante réglable étant prévu dans l'espace de cabine, et la machine de travail mobile se trouvant dans le second mode de fonctionnement, **caractérisé en ce que**
une pression intérieure présentant une pression minimale prédéterminée est définie dans l'espace de cabine,
le niveau de puissance le plus élevé de la soufflante du système de climatisation est choisi de manière à correspondre à la quantité d'air maximale admissible à travers le filtre du second type (26) lorsque le ventilateur (18) est éteint, et **en ce que** le dispositif de réglage et/ou de commande allume et règle le ventilateur (18) de la ventilation de protection (10) lorsque la soufflante de l'espace de cabine présente un niveau de puissance inférieur au niveau de puissance le plus élevé.

15. Procédé de fonctionnement d'une machine de travail mobile selon la revendication 14, **caractérisé en ce qu'**un passage du second mode de fonctionnement au premier mode de fonctionnement se fait de sorte qu'un filtre du premier type (24) se trouve dans la ventilation de protection (10), et **en ce que** la soufflante du système de climatisation est réglée sur la totalité de la plage de puissance du système de climatisation.
